# EUROPÄISCHE PATENTSCHRIFT

(11) **EP 1 582 427 B1**
(45) Veröffentlichungstag und Bekanntmachung des Hinweises auf die Patenterteilung: **06.10.2010**
(21) Anmeldenummer: 05101943.8
(22) Anmeldetag: 14.03.2005
(51) Int. Cl.: B60T 8/36

(54) **Hydraulikaggregat für eine Bremsanlage**
Hydraulic unit for a vehicle brake system
Ensemble hydraulique pour système de freinage

(30) Priorität: 03.04.2004 DE 102004016509; 17.04.2004 DE 102004018680
(43) Veröffentlichungstag der Anmeldung: 05.10.2005
(73) Patentinhaber: ROBERT BOSCH GMBH, 70442 Stuttgart (DE)
(72) Erfinder: Pabst, Carsten, 70499, Stuttgart (DE); Deringer, Helmut, 74391, Erligheim (DE)

(56) Entgegenhaltungen:
- DE-A1- 4 311 263
- DE-B3- 10 302 681
- US-A- 5 967 623

## Beschreibung

### Stand der Technik

Die vorliegende Erfindung betrifft ein Hydraulikaggregat für eine Bremsanlage eines Fahrzeugs.

Bremsanlagen für Fahrzeuge sind in unterschiedlichen Ausgestaltungen bekannt. Eine aus der DE 199 14 400 A1 bekannte Bremsanlage umfasst einen Motor, welcher ein Pumpenelement antreibt, welches über Leitungen mit einem Speicher verbunden ist. Hierbei hat sich nun herausgestellt, dass aufgrund der Verbindungsleitung zwischen dem Pumpenelement und dem Speicher Pulsationen in der Verbindungsleitung auftreten können. Diese Pulsationen können dabei unerwünschte Geräusche während des Betriebes erzeugen. Weiterhin hat sich herausgestellt, dass, wenn mehrere Pumpenelemente vorgesehen sind und diese über verschiedene Leitungen in einen Druckstrang zusammengeführt werden, derartige Pulsationen vermehrt auftreten und damit die Gefahr von unerwünschten Geräuschen weiter steigt. Da aufgrund der hohen Druckanforderungen in den Bremsanlagen üblicher Weise mehrere Pumpenelemente verwendet werden, treten somit im Betrieb eine Vielzahl unerwünschte Geräusche auf.

Aus der DE 43 11 263 A1 ist ein Hydraulikaggregat für eine Bremsanlage eines Fahrzeugs bekannt, bei dem im Unterschied zur vorliegenden Erfindung der Antrieb, das Pumpenelement und ein elektronisches Steuergerät auf einer Achse in Reihe angeordnet sind. Ein Speicher liegt bei diesem Stand der Technik unterhalb des Pumpenelements, so dass seine Längsachse quer zu der oben erläuterten Achse verläuft. Diese Anordnung erlaubt den Einsatz eines quaderförmigen Gehäuseblocks, der zur spanenden Herstellung der Aufnahmen für Pumpenelemente und Ventile einfach in einer Bearbeitungsmaschine einspannbar ist, der aber Nachteile hinsichtlich der Länge notwendiger Kanäle zur Verbindung des Speichers mit den einzelnen Pumpenelementen hat. Wie bereits oben ausgeführt, hat die Kanallänge entscheidenden Einfluss auf die Ausbildung unerwünschter Pulsationen und Geräusche und kann darüber hinaus den Bauraumbedarf des Gehäuseblocks vergrößern.

Aus der US 5,967,623 A, die den nächstliegenden Stand der Technik bildet, ist ein Hydraulikaggregat für eine Bremsanlage mit Pumpenelement, Antrieb und Speicher bekannt, bei dem der Speicher und das Pumpenelement in einem gemeinsamen Gehäuseblock untergebracht sind. Der Speicher liegt dabei seitlich versetzt zu einer Achse, die koaxial zur Längsachse des Antriebs verläuft. Dadurch liegen die Baugruppen Pumpenelement, Antrieb und Speicher nicht in Reihe und bewirken deshalb einen erhöhten Bauraumbedarf des Hydraulikaggregats.

### Vorteile der Erfindung

Ein erfindungsgemäßes Hydraulikaggregat mit den Merkmalen des Patentanspruchs 1 weist demgegenüber den Vorteil auf, dass es eine sehr kompakte und platzsparende Einheit ist. Weiterhin treten im Betrieb keine Geräusche auf. Erfindungsgemäß umfasst das Hydraulikaggregat dabei ein Pumpenelement, einen Antrieb für das Pumpenelement sowie einen Speicher zur Speicherung von Hydraulikfluid. Dabei sind das Pumpenelement und der Speicher unmittelbar benachbart zueinander angeordnet und ein Ausgang des Pumpenelements mündet unmittelbar in den Speicher. D.h., es ist keine Verbindungsleitung zwischen Pumpenelement und Speicher notwendig. Gemäß einer alternativen erfindungsgemäßen Ausgestaltung ist ein Ausgang des Pumpenelements über eine sehr kurze Verbindungsleitung mit einer Länge bis ca. 30 mm mit dem Speicher verbunden. Dadurch ist es erfindungsgemäß möglich, auf lange Verbindungsleitungen (im Stand der Technik über 100 mm) zwischen dem Pumpenelement und dem Speicher zu verzichten, so dass keine Pulsationen in Leitungen auftreten können. Die während des Betriebes des Pumpenelements entstehenden Pulsationen können durch das große Volumen des Speichers direkt gedämpft werden, so dass sich keine merkliche Geräuschentwicklung beim Betrieb des Pumpenelements ergibt. Hierbei können auch zwei oder drei oder mehrere Pumpenelemente gleichzeitig betrieben werden.

Ein weiterer Vorteil ergibt sich erfindungsgemäß dadurch, dass die Verbindungen zwischen den Pumpenelementen und dem Speicher ohne zusätzliche Verschlusselemente dazwischen ausgeführt werden können.

Erfindungsgemäß liegen der Antrieb, das Pumpenelement und der Speicher auf einer zur Längsachse des Antriebs koaxialen Achse in Reihe. Dadurch ergibt sich ein besonders kompaktes Hydraulikaggregat, welches einen minimalen Bauraum einnimmt.

Die Unteransprüche zeigen bevorzugte Weiterbildungen der Erfindung.

Bevorzugt ist das Pumpenelement in einem Gehäusebauteil angeordnet und der Speicher und/oder der Antrieb des Pumpenelements sind an das Gehäuse angeflanscht. Dadurch kann ein besonders einfacher und kostengünstiger Aufbau erreicht werden.

Weiterhin bevorzugt ist das Gehäusebauteil des Pumpenelements im Wesentlichen L-förmig mit einem ersten und einem zweiten Schenkel ausgebildet. Vorzugsweise ist das Pumpenelement dabei im ersten Schenkel angeordnet und Einlassbohrungen für Ventilelemente sind im zweiten Schenkel angeordnet. Hierbei ist weiterhin denkbar, dass die Ventilelemente auch teilweise oder vollständig in dem zweiten Schenkel des Gehäusebauteils angeordnet sind. Als Ventilelemente kommen beispielsweise Magnetventile in Frage.

Weiter bevorzugt umfasst das Hydraulikaggregat ein Steuergerät für den Antrieb und/oder für das Pumpenelement, wobei eine Längsachse des Steuergeräts parallel zu der Achse angeordnet ist, auf welcher der Antrieb, das Pumpenelement und der Speicher liegen.

Um einen besonders kompakten Aufbau bereitzustellen, ist vorzugsweise die Länge des Steuergeräts in Richtung seiner Längsachse kleiner oder gleich einer Gesamtlänge der in Reihe angeordneten Bauteile Antrieb, Pumpenelement und Speicher.

Weiter bevorzugt ist am Steuergerät ein Steckeranschluss angeordnet und eine Länge des Steuergeräts mitsamt dem Steckeranschluss ist Richtung der Längsachse ist kleiner oder gleich der Gesamtlänge der in Reihe angeordneten Bauteile Antrieb, Pumpenelement und Speicher.

Um die Herstellungs- und Montagekosten möglichst gering zu halten, ist der Speicher und/oder ein Gehäuse des Steuergeräts vorzugsweise einstückig mit dem Gehäusebauteil ausgebildet.

Das erfindungsgemäße Hydraulikaggregat ist somit ein kompaktes Bauteil und wird in Fahrzeugbremsanlagen, wie beispielsweise elektrohydraulische Bremsanlagen verwendet.

### Zeichnung

Nachfolgend werden unter Bezugnahme auf die begleitende Zeichnung Ausführungsbeispiele der vorliegenden Erfindung beschrieben. In der Zeichnung ist:
- Figur 1: eine schematische, perspektivische Ansicht eines Hydraulikaggregats gemäß einem ersten Ausführungsbeispiel der vorliegenden Erfindung und
- Figur 2: eine schematische, perspektivische Ansicht eines Hydraulikaggregats gemäß einem zweiten Ausführungsbeispiel der vorliegenden Erfindung.

### Beschreibung der Ausführungsbeispiele

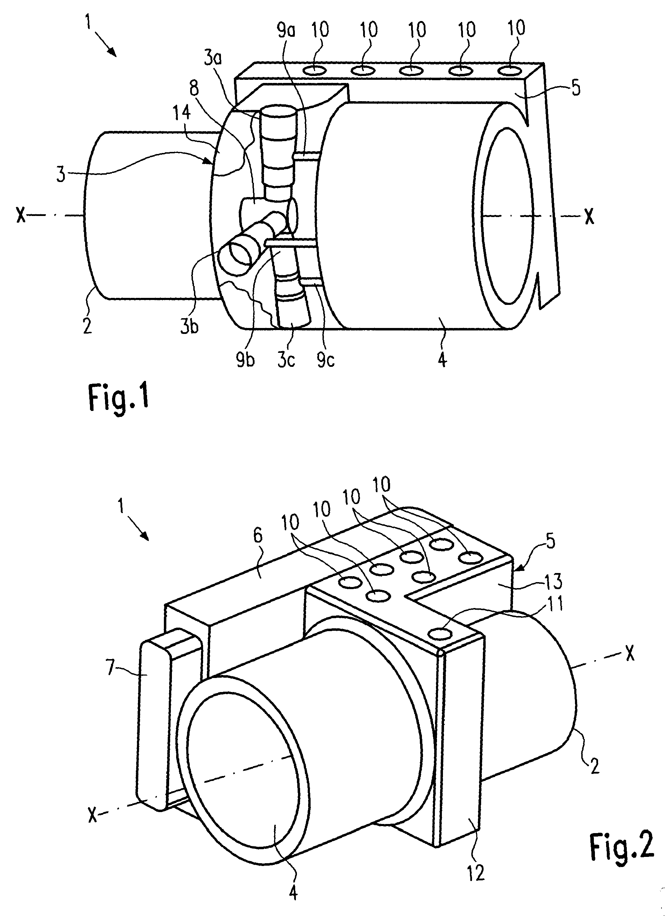

Nachfolgend wird unter Bezugnahme auf Figur 1 ein Hydraulikaggregat 1 gemäß einem ersten Ausführungsbeispiel der vorliegenden Erfindung beschrieben.

Das Hydraulikaggregat 1 umfasst einen Motor 2, ein Pumpenelement 3 und einen Speicher 4. Ferner ist ein Gehäusebauteil 5 vorgesehen, welches im Wesentlichen die Form eines länglichen Quaders aufweist. Im Gehäusebauteil 5 sind mehrere Einlassöffnungen 10 für nicht dargestellte Ventile ausgebildet. Es sei angemerkt, dass die Ventile auch unmittelbar in das Gehäusebauteil 5 integriert sein können. Die Einlassöffnungen 10 der Ventile sind dabei mit dem Inneren des Speichers 4 verbunden und werden mit unter Druck stehendem Fluid versorgt.

Das Pumpenelement 3 ist, wie aus Figur 1 ersichtlich ist, zwischen dem elektrischen Motor 2 und dem Speicher 4 in einem Gehäuse 14 angeordnet. In diesem Ausführungsbeispiel besteht das Pumpenelement aus drei einzelnen Pumpenelementen 3a, 3b und 3c. Der elektrische Motor treibt einen Exzenter 8 an, welcher in bekannter Weise unter Druck stehendes Hydraulikfluid erzeugt. Die Auslässe der Pumpenelemente 3a, 3b, 3c sind mit den Bezugszeichen 9a, 9b, 9c gekennzeichnet. Über die Auslässe 9a, 9b und 9c sind die einzelnen Pumpenelemente 3a, 3b, 3c jeweils mit dem Speicher 4 verbunden. Zur besseren Darstellbarkeit sind in Figur 1 die Auslässe als kurze Verbindungsleitungen dargestellt, wobei in der Praxis diese Verbindungsleitung praktisch nicht vorhanden sein müssen, da die Auslässe der Pumpenelemente unmittelbar an den Speicher 4 angrenzen können. Dadurch mündet das von den Pumpenelementen, unter Druck stehende Hydraulikfluid unmittelbar in den Speicher 4, so dass keine Pulsationen in Verbindungsleitungen entstehen können, welche zu einer Geräuschentwicklung führen könnten. Somit ist praktisch keine Leitungsverbindung zwischen den Bauteilen vorhanden.

Da die drei Pumpenelemente 3a, 3b, 3c in einer Ebene senkrecht zur Achse X-X liegen, ist der Abstand von jedem Pumpenelement zum Speicher 4 gleich. Dadurch können die im Stand der Technik bekannten Probleme aufgrund von unterschiedlichen Leitungslängen zwischen einzelnen Pumpenelementen und dadurch erzeugter unerwünschter Geräuschentwicklung verhindert werden. Weiterhin ist aufgrund der kurzen Anbindung der Pumpenelemente 3a, 3b, 3c zum Speicher 4 eine Geräuschentwicklung im Betrieb weiter reduziert, da der Speicher 4 aufgrund seines großen Volumens eine Dämpfung der vorhandenen Pulsation im Betrieb ermöglicht. Dadurch kann eine Geräuschentwicklung im Betrieb durch Pulsationen im Hydraulikfluid minimiert werden.

Somit kann durch die direkte und separate Anbindung der einzelnen Pumpenelemente an den Speicher das Auftreten von übermäßigen Drucküberhöhungen verhindert werden. Da die drei Pumpenelemente in einer Ebene liegen, kann die direkte und extrem kurze Anbindung separat für jedes Pumpenelement realisiert werden.

Nachfolgend wird unter Bezugnahme auf Figur 2 ein Hydraulikaggregat 1 gemäß einem zweiten Ausführungsbeispiel der vorliegenden Erfindung beschrieben. Gleiche bzw. funktional gleiche Teile sind dabei mit den gleichen Bezugszeichen wie im ersten Ausführungsbeispiel bezeichnet.

Wie in Figur 2 gezeigt, ist das Gehäusebauteil 5 des Hydraulikaggregats 1 im Wesentlichen L-förmig. Dabei umfasst das Gehäusebauteil 5 einen ersten Schenkel 12 und einen zweiten Schenkel 13. Die nicht dargestellten Pumpenelemente sind dabei im ersten Schenkel 12 zwischen dem Speicher 4 und dem elektrischen Motor 2 angeordnet. Mit 11 ist eine Ansaugöffnung bezeichnet, über welche Hydraulikfluid aus einem nicht gezeigten Behälter angesaugt wird. Wie im ersten Ausführungsbeispiel liegen die Pumpenelemente des zweiten Ausführungsbeispiels unmittelbar benachbart zum Speicher 4, so dass die Auslässe der Pumpenelemente unmittelbar in den Speicher münden bzw. minimale Verbindungswege zwischen den Pumpenelementen und dem Speicher realisiert werden können.

Weiterhin ist in diesem Ausführungsbeispiel das Gehäuse des Speichers 4 einstückig mit dem Gehäusebauteil 5 ausgebildet. Ferner ist an dem zweiten Schenkel 13 des Gehäusebauteils 5, in welchem eine Vielzahl von Einlassöffnungen 10 für die Ventile angeordnet ist, ein Steuergerät 6 mit einem Stecker 7 angeflanscht. Dabei ist eine Gesamtlänge des Steuergeräts 6 und des Steckers 7 in Längsrichtung des Hydraulikaggregats 1 in etwa gleich wie eine Länge der auf einer Achse X-X angeordneten Bauteile Motor 2, Pumpenelement und Speicher 4. Durch diese Anordnung am L-förmigen Gehäusebauteil 5 kann eine besonders kompakte Ausgestaltung des erfindungsgemäßen Hydraulikaggregats bereitgestellt werden. Durch die Reihenanordnung der Bauteile Motor, Pumpenelement und Speicher kann somit wiederum eine minimale Geräuschentwicklung aufgrund von Pulsationen durch einen unstetigen Förderstrom verhindert werden. Ansonsten entspricht dieses Ausführungsbeispiel dem vorherigen Ausführungsbeispiel, so dass auf die dort gegebene Beschreibung verwiesen werden kann.

## Patentansprüche

1. Hydraulikaggregat für eine Bremsanlage eines Fahrzeugs,
umfassend ein Pumpenelement (3) aus wenigstens einem einzelnen Pumpenelement (3a, 3b, 3c),
einen Antrieb (2), um das Pumpenelement (3) anzutreiben und
einen Speicher (4) zur Speicherung von Hydraulikfluid,
wobei das Pumpenelement (3) und der Speicher (4) unmittelbar benachbart zueinander angeordnet sind und jeweils ein Auslass des eines jeden einzelnen Pumpenelements (3a, 3b, 3c) unmittelbar oder über eine sehr kurze Verbindungsleitung in den Speicher mündet und wobei
der Antrieb (2), das Pumpenelement (3) und der Speicher (4) auf einer Achse (X-X), die koaxial zur Längsachse des Antriebs (2) verläuft, in Reihe liegen und das Pumpenelement (3) zwischen dem Antrieb (2) und dem Speicher (4) in einem Gehäuse (5, 14) angeordnet ist.

2. Hydraulikaggregat nach Anspruch 1, **dadurch gekennzeichnet, dass** das Pumpenelement (3) in dem Gehäuse (5, 14) angeordnet ist und der Speicher (4) und/oder der Antrieb (2) an das Gehäuse (5) angeflanscht sind.

3. Hydraulikaggregat nach Anspruch 2 **dadurch gekennzeichnet, dass** das Gehäuse (5) im Wesentlichen L-förmig mit einem ersten Schenkel (12) und einem zweiten Schenkel (13) ausgebildet ist.

4. Hydraulikaggregat nach Anspruch 3, **dadurch gekennzeichnet, dass** das Pumpenelement (3) im ersten Schenkel (12) des L-förmigen Gehäuses angeordnet ist, und Einlassöffnungen (10) für Ventilelemente im zweiten Schenkel (13) angeordnet sind.

5. Hydraulikaggregat nach einem der Ansprüche 2 bis 4, **gekennzeichnet durch** ein Steuergerät (6) für den Antrieb (2) und/oder für das Pumpenelement und/oder für Ventile des Hydroaggregats, wobei eine Längsachse des Steuergeräts (6) parallel zur Achse (X-X), auf welcher der Antrieb, das Pumpenelement und der Speicher angeordnet sind, ausgerichtet ist.

6. Hydraulikaggregat nach Anspruch 5, **dadurch gekennzeichnet, dass** eine Länge des Steuergeräts in Richtung seiner Längsachse kleiner oder gleich einer Gesamtlänge der in Reihe angeordneten Bauteile Antrieb (2), Pumpenelement (3) und Speicher (4) in Richtung der Achse (X-X) ist.

7. Hydraulikaggregat nach Anspruch 6, **dadurch gekennzeichnet, dass** ein Steckeranschluss (7) am Steuergerät (6) angeordnet ist und eine Länge des Steuergeräts mit dem Steckeranschluss in Richtung der Längsachse des Steuergeräts kleiner oder gleich der Gesamtlänge der in Reihe angeordneten Bauteile Antrieb (2), Pumpenelement (3) und Speicher (4) ist.

8. Hydraulikaggregat nach einem der Ansprüche 3 bis 7, **dadurch gekennzeichnet, dass** ein Gehäuse des Speichers (4) und/oder ein Gehäuse des Steuergeräts (6) einstückig mit dem Gehäusebauteil (5) gebildet ist.

9. Bremsanlage für ein Fahrzeug, umfassend ein Hydraulikaggregat nach einem der vorhergehenden Ansprüche.

## Claims

1. Hydraulic assembly for a brake system of a vehicle, comprising a pump element (3) composed of at least one individual pump element (3a, 3b, 3c),
a drive (2) in order to drive the pump element (3), and an accumulator (4) for the storage of hydraulic fluid, the pump element (3) and the accumulator (4) being arranged directly adjacently to one another, and in each case an outlet of each individual pump element (3a, 3b, 3c) issuing into the accumulator directly or via a very short connecting line, and
the drive (2), the pump element (3) and the accumulator (4) lying in series on an axis (X-X) which runs coaxially with respect to the longitudinal axis of the drive (2), and the pump element (3) being arranged between the drive (2) and the accumulator (4) in a housing (5, 14).

2. Hydraulic assembly according to Claim 1, **characterized in that** the pump element (3) is arranged in the housing (5, 14) and the accumulator (4) and/or the drive (2) are/is flanged to the housing (5).

3. Hydraulic assembly according to Claim 2, **characterized in that** the housing (5) is of essentially L-shaped design with a first leg (12) and with a second leg (13).

4. Hydraulic assembly according to Claim 3, **characterized in that** the pump element (3) is arranged in the first leg (12) of the L-shaped housing and inlet ports (10) for valve elements are arranged in the second leg (13).

5. Hydraulic assembly according to one of Claims 2 to 4, **characterized by** a control apparatus (6) for the drive (2) and/or for the pump element and/or for valves of the hydraulic assembly, a longitudinal axis of the control apparatus (6) being oriented parallel to the axis (X-X) on which the drive, the pump element and the accumulator are arranged.

6. Hydraulic assembly according to Claim 5, **characterized in that** a length of the control apparatus in the direction of its longitudinal axis is smaller than or equal to an overall length of the drive (2), pump element (3) and accumulator (4), as series-arranged components, in the direction of the axis (X-X) .

7. Hydraulic assembly according to Claim 6, **characterized in that** a plug connection (7) is arranged on the control apparatus (6), and a length of the control apparatus together with the plug connection in the direction of the longitudinal axis of the control apparatus is smaller than or equal to the overall length of the drive (2), pump element (3) and accumulator (4), as series-arranged components.

8. Hydraulic assembly according to one of Claims 3 to 7, **characterized in that** a housing of the accumulator (4) and/or a housing of the control apparatus (6) are/is formed in one piece with the housing component (5).

9. Brake system for a vehicle, comprising a hydraulic assembly according to one of the preceding claims.

## Revendications

1. Unité hydraulique pour une installation de freinage d'un véhicule, comprenant un élément de pompe (3) constitué d'au moins un élément de pompe individuel (3a, 3b, 3c),
un entraînement (2), pour entraîner l'élément de pompe (3) et
un accumulateur (4) pour l'accumulation de fluide hydraulique,
l'élément de pompe (3) et l'accumulateur (4) étant disposés directement l'un à côté de l'autre et à chaque fois une sortie de chaque élément de pompe individuel (3a, 3b, 3c) débouchant directement ou par le biais d'une conduite de connexion très courte dans l'accumulateur, et l'entraînement (2), l'élément de pompe (3) et l'accumulateur (4) se trouvant sur un axe (X-X), qui s'étend coaxialement à l'axe longitudinal de l'entraînement (2), et l'élément de pompe (3) étant disposé entre l'entraînement (2) et l'accumulateur (4) dans un boîtier (5, 14).

2. Unité hydraulique selon la revendication 1, **caractérisée en ce que** l'élément de pompe (3) est disposé dans le boîtier (5, 14) et l'accumulateur (4) et/ou l'entraînement (2) étant fixés par bridage sur le boîtier (5).

3. Unité hydraulique selon la revendication 2, **caractérisée en ce que** le boîtier (5) est réalisé essentiellement en forme de L avec une première branche (12) et une deuxième branche (13).

4. Unité hydraulique selon la revendication 3, **caractérisée en ce que** l'élément de pompe (3) est disposé dans la première branche (12) du boîtier en forme de L, et des ouvertures d'entrée (10) pour des éléments de soupape sont disposées dans la deuxième branche (13).

5. Unité hydraulique selon l'une quelconque des revendications 2 à 4, **caractérisée par** un appareil de commande (6) pour l'entraînement (2) et/ou pour l'élément de pompe et/ou pour des soupapes de l'unité hydraulique, un axe longitudinal de l'appareil de commande (6) étant orienté parallèlement à l'axe (X-X), sur lequel sont disposés l'entraînement, l'élément de pompe et l'accumulateur.

6. Unité hydraulique selon la revendication 5, **caractérisée en ce qu'**une longueur de l'appareil de commande dans la direction de son axe longitudinal est inférieure ou égale à une longueur totale des composants disposés en série, à savoir l'entraînement (2), l'élément de pompe (3) et l'accumulateur (4) dans la direction de l'axe (X-X).

7. Unité hydraulique selon la revendication 6, **caractérisée en ce qu'**un raccord de connecteur (7) est disposé sur l'appareil de commande (6) et une longueur de l'appareil de commande avec le raccord de connecteur dans la direction de l'axe longitudinal de l'appareil de commande est inférieure ou égale à la longueur totale des composants disposés en série, à savoir l'entraînement (2), l'élément de pompe (3) et l'accumulateur (4).

8. Unité hydraulique selon l'une quelconque des revendications 3 à 7, **caractérisée en ce qu'**un boîtier de l'accumulateur (4) et/ou un boîtier de l'appareil de commande (6) est formé d'une seule pièce avec le composant du boîtier (5).

9. Installation de freinage pour un véhicule, comprenant une unité hydraulique selon l'une quelconque des revendications précédentes.
